# FASCICULE DE BREVET EUROPEEN

(11) **EP 2 503 091 B1**
(45) Date de publication et mention de la délivrance du brevet: **11.05.2016**
(21) Numéro de dépôt: 12160908.5
(22) Date de dépôt: 23.03.2012
(51) Int. Cl.: E06B 9/74, E06B 9/76, E06B 9/70, E06B 9/88, E06B 9/68, E06B 9/90, F16H 1/16

(54) **Dispositif de manoeuvre pour installation de fermeture ou de protection solaire, et installation de fermeture ou de protection solaire equipée d'un tel dispositif**
Betätigungsvorrichtung für Verschluss- oder Sonnenschutzanlage, und mit einer solchen Vorrichtung ausgestattete Verschluss- oder Sonnenschutzanlage
Control device for a closure or sun-protection facility, and closure or sun-protection facility provided with such a device

(30) Priorité: 24.03.2011 FR 1152460
(43) Date de publication de la demande: 26.09.2012
(73) Titulaire: Zurflüh-Feller, 25150 Pont de Roide (FR)
(72) Inventeur: Olmi, Marc, 25150 PONT DE ROIDE (FR)
(74) Mandataire: Myon, Gérard Jean-Pierre

(56) Documents cités:
- EP-A1- 1 211 380
- EP-A1- 1 491 713
- EP-A1- 1 568 845
- EP-A1- 1 785 578
- WO-A1-2008/095335
- FR-A1- 2 449 192
- FR-A5- 2 082 061
- US-A- 6 003 397

## Description

La présente invention concerne un dispositif de manoeuvre pour une installation de fermeture ou de protection solaire, notamment de type store ou volet roulant. L'invention concerne également une installation de fermeture de protection solaire équipée d'un tel dispositif de manoeuvre. Le domaine de l'invention est celui des installations de type stores ou volets roulants destinés à équiper un ouvrant de bâtiment, tel qu'une porte ou une fenêtre agencée dans un mur ou un toit.

De manière classique, une installation de fermeture ou de protection solaire comprend un tablier enroulé autour d'un arbre qui se déroule entre deux coulisses afin de masquer la fenêtre. Une action manuelle ou électrique permet de manoeuvrer la descente ou la montée du tablier. Dans le cas d'une installation manuelle, un dispositif de manoeuvre du type treuil est prévu pour actionner l'arbre d'enroulement du tablier par le biais d'une manivelle. Le treuil comprend généralement un mécanisme d'engrenage constitué par un couple roue et vis sans fin, considéré comme réversible lorsque l'angle d'hélice de la vis est supérieur à 5°. Dans le cas d'une installation automatisée, l'arbre d'enroulement est actionné par un moteur électrique, néanmoins un treuil adapté pour recevoir une manivelle peut être prévu par sécurité.

En pratique, le treuil doit empêcher le déroulement du tablier sous son poids propre quand la manivelle n'est pas actionnée par un opérateur. A cet effet, il est connu d'équiper le mécanisme d'engrenage du treuil d'un système limiteur de couple afin d'empêcher sa rotation sous le seul poids du tablier.

EP-A-1 211 380, EP-A-1 491 713, EP-A-1 568 845 et FR-A-2 449 192 décrivent chacun un treuil pour la manoeuvre d'un store ou d'un volet roulant. Ces treuils comprennent, logées dans un carter, une roue dentée coopérant avec une vis sans fin.

Dans EP-A-1 211 380, un système de freinage de la vis comprend, à chaque extrémité de la vis, une rondelle solidaire en rotation de la vis et disposée entre deux paliers fixes par rapport au carter. La poussée axiale en position de service résultant de l'accouplement entre la vis sans fin et la roue dentée comprime chaque rondelle entre deux paliers, exerçant ainsi par frottement une action de freinage de la vis sans fin.

Dans EP-A-1 491 713, un ressort frein entoure un cylindre métallique qui est lui-même disposé sur une tige de commande, et non sur la vis. Ce système de freinage est plus complexe et encombrant qu'un unique ressort frein disposé sur la vis. La vis est également pourvue d'une collerette qui coopère avec un canon pour former un cliquet. La collerette forme butée axiale contre le carter pour la vis dans un sens uniquement, alors que dans l'autre sens, une bague arrête la vis par l'intermédiaire d'un ressort additionnel et du canon muni d'une collerette crantée. Cette construction est plus complexe, plus encombrante et moins efficace dans que dans la présente invention.

Dans EP-A-1 568 845, le treuil comprend un dispositif à crabot, incluant un premier élément denté d'entraînement qui est assujetti aux moyens de manoeuvre du treuil, un deuxième élément denté entraîné par le premier élément et solidaire de la vis, ainsi que des moyens élastiques prévues pour presser les éléments dentés l'un contre l'autre au niveau de leurs dentures. Le premier élément ne constitue pas une collerette formant butée axiale suivant l'axe de rotation de la vis en coopérant avec le carter du treuil. En effet, il existe une possibilité de mouvement axial entre les éléments dentés de pour l'engagement ou le dégagement de leurs dentures, ce mouvement étant autorisé par la présence des moyens élastiques, notamment des rondelles Belleville. Ce document suggère explicitement l'utilisation des rondelles Belleville pour ne pas détériorer le carter. Au contraire, la présente invention permet d'éviter l'utilisation de pièces additionnelles, telles que des rondelles d'appui antifriction, pour limiter l'usure du carter. Dans ce document, on remarque également que la surface d'appui axial de la vis contre le carter présente une étendue réduite, ce qui ne permet pas une bonne reprise des efforts axiaux de la vis, engendrés par la charge du tablier sur la roue dentée.

Dans FR-A-2 449 192, le treuil comprend un ressort frein limitant la transmission d'un couple de la roue vers la vis. Ce ressort tourne avec la vis sans fin. Le treuil comprend deux roulements à contact oblique disposés de part et d'autre des dents de la vis. Ces roulements comprennent des billes disposées sur des pistes de roulements qui sont formées, d'une part du côté intérieur, sur la vis et, d'autre part du côté extérieur, sur des bagues externes de roulement montés dans le carter. La piste de roulement ne peut pas être considérée comme une collerette dont serait pourvue la vis, au sens de l'invention. Les roulements incluent des billes et des bagues qui forment des pièces antifriction additionnelles en butée axiale. Les pistes de roulement réduisent la résistance mécanique de la vis.

Le but de la présence invention est de proposer un dispositif de manoeuvre amélioré, notamment compact, efficace et résistant.

A cet effet, l'invention a pour objet un dispositif de manoeuvre pour une installation de fermeture ou de protection solaire, notamment de type store ou volet roulant, ce dispositif comprenant une roue dentée en prise avec une vis sans fin disposées dans un carter, la roue étant mobile en rotation par rapport au carter autour d'un premier axe de rotation, la vis étant mobile en rotation par rapport au carter autour d'un deuxième axe de rotation qui est perpendiculaire au premier axe de rotation, la vis étant pourvue d'un unique ressort frein limitant la transmission d'un couple de la roue vers la vis. Le dispositif est caractérisé en ce que la vis est également pourvue d'au moins une collerette logée dans une rainure du carter et formant butée axiale suivant le deuxième axe de rotation en coopérant avec le carter dans cette rainure, la ou les collerettes étant disposées à l'opposé du ressort frein le long de la vis, par rapport à un plan contenant le premier axe de rotation et un axe perpendiculaire aux premier et deuxième axes de rotation.

Ainsi, l'invention permet de manoeuvrer de manière simple et pratique un arbre d'enroulement de tablier appartenant à l'installation. En particulier, le dispositif de manoeuvre est un treuil pourvu d'un mécanisme d'engrènement constitué par la roue dentée et la vis sans fin, avec un unique ressort frein et une ou plusieurs collerettes. La configuration de la collerette et du ressort frein permet de réduire l'encombrement du treuil, tout en présentant une efficacité et une fiabilité au moins équivalente aux dispositifs de manoeuvre existants. L'agencement de la collerette et du carter améliore la résistance du treuil sous l'action des charges axiales exercées sur la vis, tout en évitant l'utilisation de pièces antifriction additionnelles. Le treuil selon l'invention muni d'une ou plusieurs collerettes permet de maximiser les surfaces d'appui et donc diminuer la contrainte supportée par les matériaux, assurant ainsi une meilleure longévité de ce treuil.

Selon d'autres caractéristiques avantageuses de l'invention, prises isolément ou en combinaison :
- La vis est pourvue d'au moins une collerette formant butée axiale dans la rainure du carter dans les deux sens suivant le deuxième axe de rotation.
- La ou les collerettes et la vis forment une pièce monobloc.
- La ou chaque collerette présente un profil d'épaulement annulaire et est logé dans une rainure annulaire correspondante du carter.
- La vis sans fin comprend plusieurs collerettes agencées en parallèle d'un même côté de la vis par rapport à la roue dentée.
- Le ressort frein comprend un enroulement positionné avec un ajustement serré autour d'une surface cylindrique de la vis et reliant deux brins d'extrémité du ressort frein, ces deux brins étant susceptibles de venir en butée, respectivement de part et d'autre de l'axe de vis, contre des parois d'un logement ménagé dans le carter.
- Le ressort frein empêche la rotation de la vis sous l'effet d'un couple généré sur cette vis par le poids propre d'un tablier de store ou de volet monté sur un arbre solidaire en rotation de la roue.
- De chaque côté d'une partie dentée de la roue suivant l'axe de roue, une rondelle antifriction formant butée axiale est disposée entre la partie dentée et le carter.
- La roue dentée comporte, d'une part, une denture non débouchante sur les deux bords opposés de cette roue dentée le long de l'axe de roue et, d'autre part, une collerette ménagée sur la roue dentée et reçue dans une rainure du carter, formant butée axiale dans les deux sens le long de l'axe de roue.
- Le carter comprend une première partie et une deuxième partie délimitant entre elles une cavité dans laquelle sont logés la roue, la vis et le ressort frein, les deux parties de carter étant assemblées selon un procédé de sertissage par fluage ou par ultrason d'au moins un organe en saillie de la première partie dans un évidement de la deuxième partie.
- La vis comporte une partie creuse apte à coopérer en rotation avec un mécanisme d'entraînement en rotation, notamment une tringle d'attaque de genouillère, une broche appartenant à un système d'actionnement ou un arbre de sortie d'un moteur électrique.
- La partie creuse comprend un rainurage de section hexagonale, carrée ou étoilée, recevant sélectivement la tringle ou la broche et solidarisant cette tringle ou cette broche en rotation avec la vis.
- Le dispositif est équipé, sélectivement en fonction de contrainte de montage de l'installation sur un bâtiment, soit d'un bloc genouillère muni de la tringle et d'une manivelle disposée à l'intérieur du bâtiment, soit d'un système d'actionnement muni de la broche et d'une manivelle disposée à l'extérieur du bâtiment.

L'invention a également pour objet une installation de fermeture et de protection solaire, notamment du type store ou volet roulant, équipée d'un dispositif de manoeuvre tel que mentionné ci-dessus.

Selon une variante particulière, l'installation est équipée d'un moteur électrique, comprenant notamment un arbre de sortie adapté pour coopérer avec une partie creuse de la vis sans fin.

L'invention sera mieux comprise à la lecture de la description qui va suivre, donnée uniquement à titre d'exemple non limitatif et faite en référence aux dessins sur lesquels :
- la figure 1 est une vue partielle en perspective d'un dispositif de manoeuvre conforme à l'invention, appartenant à une installation également conforme à l'invention ;
- la figure 2 est une vue en élévation et à plus grande échelle selon la flèche Il à la figure 1, montrant un mécanisme d'engrènement disposé à l'intérieur d'un demi-carter du dispositif ;
- la figure 3 est une autre vue en perspective, montrant le dispositif partiellement représenté à la figure 2 ;
- la figure 4 est une autre vue en perspective, montrant le dispositif avec ses deux demi-carters assemblés ;
- la figure 5 est une vue en élévation selon la flèche V à la figure 4 ;
- les figures 6, 7 et 8 sont des coupes, respectivement selon les lignes VI-VI, VII-VII et VIII-VIII à la figure 5, l'échelle des figures 7 et 8 étant augmentée par rapport à celle des figures 5 et 6 ;
- la figure 9 est une vue en élévation d'un dispositif conforme à un deuxième mode de réalisation de l'invention ; et
- la figure 10 est une vue en perspective éclatée partielle du dispositif de la figure 9.

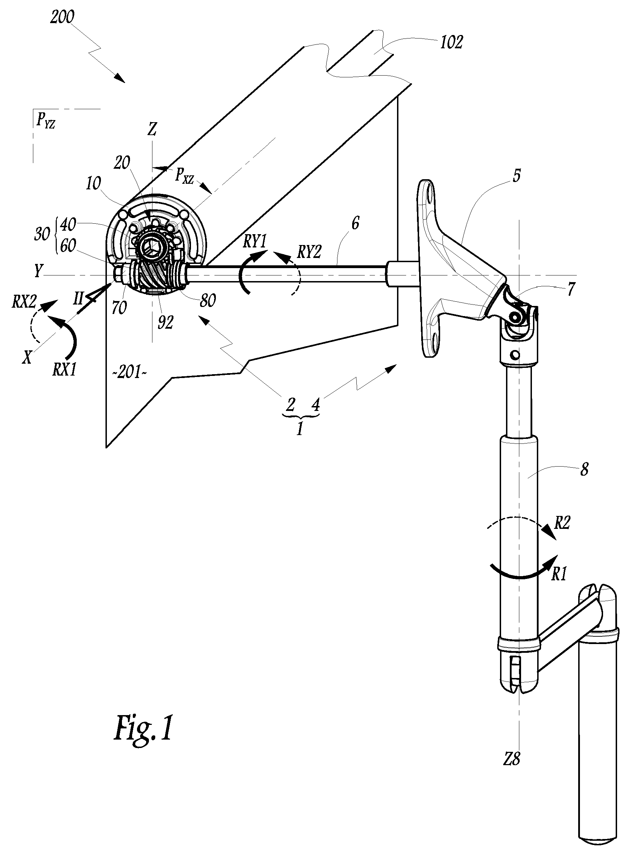

Sur les figures 1 à 8 est représenté un dispositif de manoeuvre 1 conforme à l'invention, qui appartient à une installation 200 de fermeture ou de protection solaire également conforme à l'invention qui comprend un tablier 201 sélectivement enroulable sur un tube d'enroulement 202.

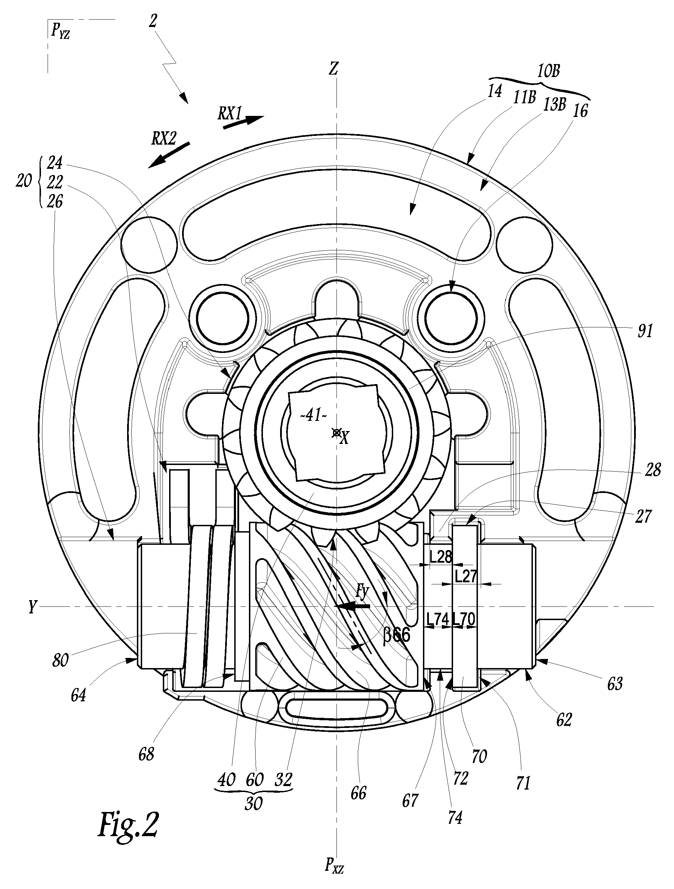

Cette installation 200, dont les différents organes constitutifs ne sont pas représentés sur les figures 2 à 8, comprend également un caisson parallélépipédique non représenté abritant l'arbre d'enroulement 202 du tablier 201, par exemple du type toile de store ou lames de volet. Le tablier 201 s'enroule et se déroule entre deux coulisses non représentées qui s'étendent parallèlement entre elles et perpendiculairement à l'arbre 202 et au caisson. Une barre de charge non représentée est fixée à l'extrémité inférieure du tablier 201 opposée à l'arbre et coopère avec les coulisses. En alternative, l'installation 200 peut présenter une configuration différente, notamment des organes additionnels.

Comme montré à la figure 1, le dispositif 1 équipant cette installation 200 comprend un treuil 2 et un bloc genouillère 4.

Le treuil 2 est disposé à une extrémité intérieure du caisson et coopère avec l'arbre 202, suivant un axe X de rotation de cet arbre. Le treuil 2 comprend un carter 10 délimitant une cavité intérieure 20, dans laquelle est logé un mécanisme d'engrènement 30 constitué par une roue dentée 40 et une vis sans fin 60. La roue 40 est solidaire de l'arbre 202 et mobile en rotation autour de l'axe X, tandis que la vis 60 est mobile en rotation autour d'un axe Y perpendiculaire à l'axe X.

La roue dentée 40 est pourvue d'un logement central 41 à section globalement carrée adapté pour recevoir une tige à section carrée, non représentée et fixée à l'arbre 202. Ceci permet de solidariser en rotation la roue dentée 40 et l'arbre 202.

La vis 60 comporte une collerette 70 formant butée axiale suivant l'axe Y en coopérant avec le carter 10 lors du fonctionnement du mécanisme 30. Dans la cavité 20, le treuil 2 comprend également un ressort frein 80 monté autour de la vis 60, ainsi que des rondelles annulaires 91 et 92 montées sur la roue 40.

Par ailleurs, on définit un axe Z perpendiculaire aux axes X et Y, ainsi qu'un premier plan médian Pxz comprenant les axes X et Z et un deuxième plan médian Pyz comprenant les axes Y et Z.

Le bloc genouillère 4 pénètre partiellement dans le caisson suivant l'axe Y et coopère avec le treuil 2 pour l'entraînement de l'arbre 202. Ce bloc genouillère 4 comprend une plaque 5 de montage sur le caisson, une tringle d'attaque 6, un mécanisme de cardan 7 et une manivelle 8 accessible à un utilisateur de l'installation. La tringle 6 coopère, le long de l'axe Y, avec la vis 60 du treuil 2 et avec le cardan 7, pour la transmission au treuil 2 et à l'arbre 202 d'un mouvement de rotation de la manivelle 8 autour d'un axe Z8. Le cardan 7 permet la transmission de mouvement entre la tringle 6 et la manivelle 8 même lorsque l'axe Z8 de cette manivelle 8 n'est pas parallèle à l'axe Z.

En pratique, le treuil 2 crée un renvoi d'angle à 90° au niveau du mécanisme 30, tandis que le cardan 7 crée un renvoi d'angle suivant l'axe Y quelle que soit la position de l'axe Z8. Lorsque l'utilisateur tourne la manivelle 8 dans un sens de rotation R1 autour de l'axe Z8, la tringle 6 et la vis 60 tournent dans un sens de rotation RY1 autour de l'axe Y, tandis que la roue 40 et l'arbre d'enroulement tournent dans un sens de rotation RX1 autour de l'axe X. Dans l'autre sens, les éléments du dispositif 1 suivent des rotations R2, RY2 et RX2.

Comme montré en particulier aux figures 2, 4 et 7, le carter 10 du treuil 2 est constitué de deux demi-carters 10A et 10B. Chaque demi-carter 10A et 10B comprend une surface extérieure cylindrique à section circulaire 11 A ou 11B, une surface externe sensiblement plane 12A ou 12B, ainsi qu'une surface interne plane 13A ou 13B. Des ouïes 14 traversent chaque demi-carter 10A et 10B, respectivement depuis les surfaces 13A et 13B en direction des surfaces 12A et 12B, de sorte que lorsque le carter 10 est assemblé, trois ouïes 14 sont ainsi formées. Ces ouïes 14 sont configurées comme des trous oblongs et prévues pour le passage de vis, non représentées, permettant la fixation du carter 10 du treuil 2 dans le caisson de l'installation 200. Chaque demi-carter 10A et 10B comporte également une ouverture centrale, respectivement 19A et 19B, donnant accès au logement 41.

En outre, le demi-carter 10A constitue une partie mâle du carter 10, avec des pions 15 et un plot 17 de centrage s'étendant en saillie depuis la surface 13A dans la direction opposée à la surface 12A, tandis que le demi-carter 10B constitue une partie femelle du carter 10, avec des orifices 16 et 18 de passage des pions 15 et du plot 17 prévus pour le centrage. Les pions 15 et les orifices 16 correspondants présentent chacun un profil cylindrique à section circulaire. Le plot 17 et l'orifice 18 correspondant présentent chacun un profil « écrasé », à savoir plus allongé dans la direction de l'axe Y que dans celle de l'axe Z.

De préférence, les deux demi-carters 10A et 10B sont assemblés selon un procédé de sertissage des pions 15 et du plot 17 en saillie dans leurs orifices respectifs 16 et 18, sans utiliser de vis d'assemblage. En effet, les vis traversant les ouïes 14 sont prévues pour solidariser le carter 10 au caisson, et non pour solidariser les deux demi-carters 10A et 10B entre eux. Lorsque le carter 10 est en matière plastique, les pions 15 et le plot 17 sont rivetés par ultrason dans les orifices, respectivement 16 et 18. Lorsque le carter 10 est en métal ou alliage métallique, par exemple en fonte, en alliage d'aluminium ou en alliage de zinc et d'aluminium de type zamak, les pions 15 et le plot 17 sont sertis par fluage, c'est-à-dire en épanouissant leurs extrémités par rivetage ou frappe à froid, dans leurs orifices respectifs 16 et 18.

A l'intérieur du carter 10, entre les demi-carters 10A et 10B, est délimité la cavité 20 prévue pour recevoir le mécanisme 30, le ressort 80 et les rondelles 91 et 92. Cette cavité 20 comprend des parties 22, 24 et 26 reliées entre elles, comme montré aux figures 2, 3 et 6 à 8.

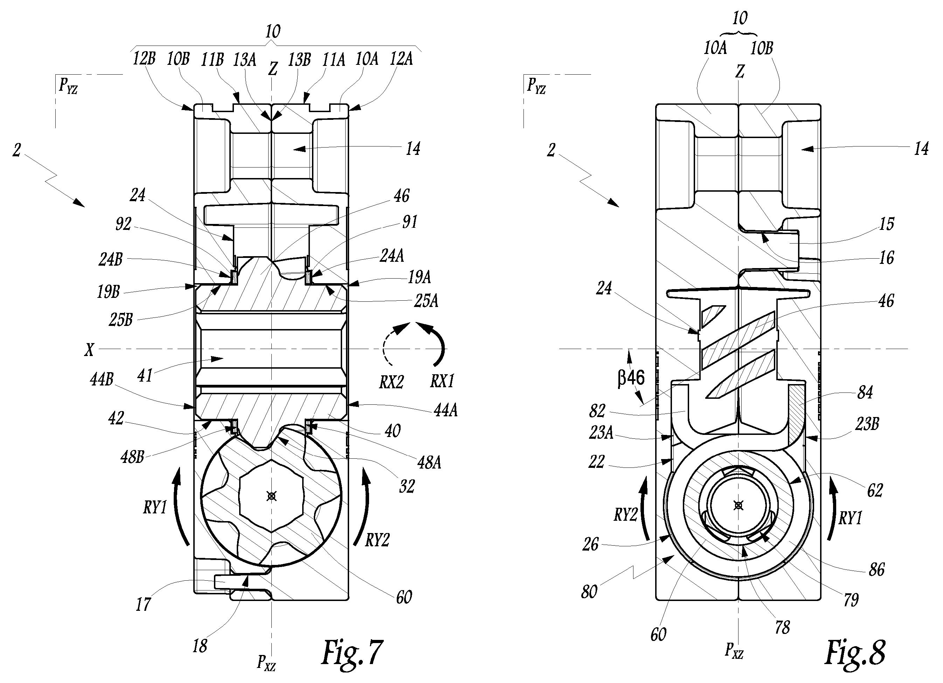

Dans la partie 22 sont situés le ressort 80 et une interface d'engrènement 32 du mécanisme 30. La roue 40 et la vis 60 coopèrent au niveau de cette interface 32, qui correspond à une zone de contact de leurs dentures hélicoïdales, respectivement 46 et 66. De part et d'autre du plan Pyz, la partie 22 présente des surfaces planes 23A et 23B d'appui du ressort 80, comme montré à la figure 8.

La partie 24 est délimitée autour de l'axe X, reçoit la roue 40 et débouche du carter 10 au niveau des surfaces 12A et 12B à travers les ouvertures 19A et 19B. La partie 24 inclut, centrés sur l'axe X, des logements annulaires 24A et 24B de réception des rondelles 91 et 92, ainsi que des paliers 25A et 25B de guidage et support de la roue 40.

La partie 26 est allongée suivant l'axe Y, reçoit la vis 60 et débouche de part et d'autre du carter 10 au niveau des surfaces 11A et 11 B. La partie 26 inclut une rainure annulaire 27 et un épaulement annulaire 28, centrés sur l'axe Y, de largeurs respectives L27 et L28 suivant cet axe Y.

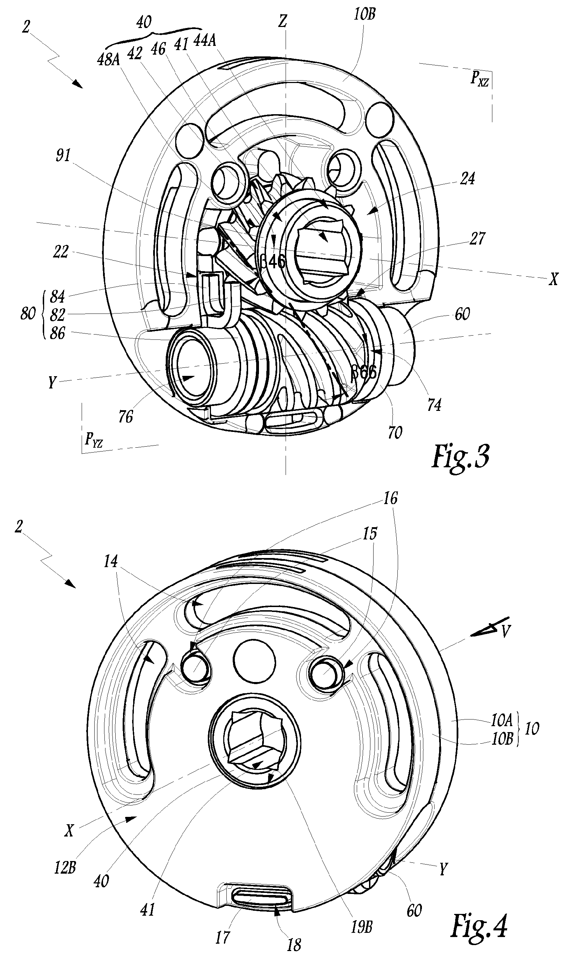

Comme montré aux figures 3, 7 et 8, la roue dentée 40 comprend le logement intérieur 41, une surface cylindrique extérieure 42, des surfaces d'extrémité 44A et 44B, ainsi que la denture 46 hélicoïdale avec un angle d'hélice β46 et des bords 48A et 48B. La surface 42 est reçue dans les paliers 25A et 25B, permettant ainsi la rotation de la roue 40 autour de l'axe X pour l'entraînement de l'arbre d'enroulement. Les extrémités 44A et 44B sont perpendiculaires à l'axe X et parallèles, respectivement, aux surfaces 12A et 12B du carter 10. Les bords 48A et 48B de la denture 46 sont taillés en raison de la faible largeur de la roue 40, chacun de ces bords 48A et 48B étant compris dans un plan perpendiculaire à l'axe X. L'angle d'hélice β46 est compris entre 15° et 25°, de préférence égal à 20°.

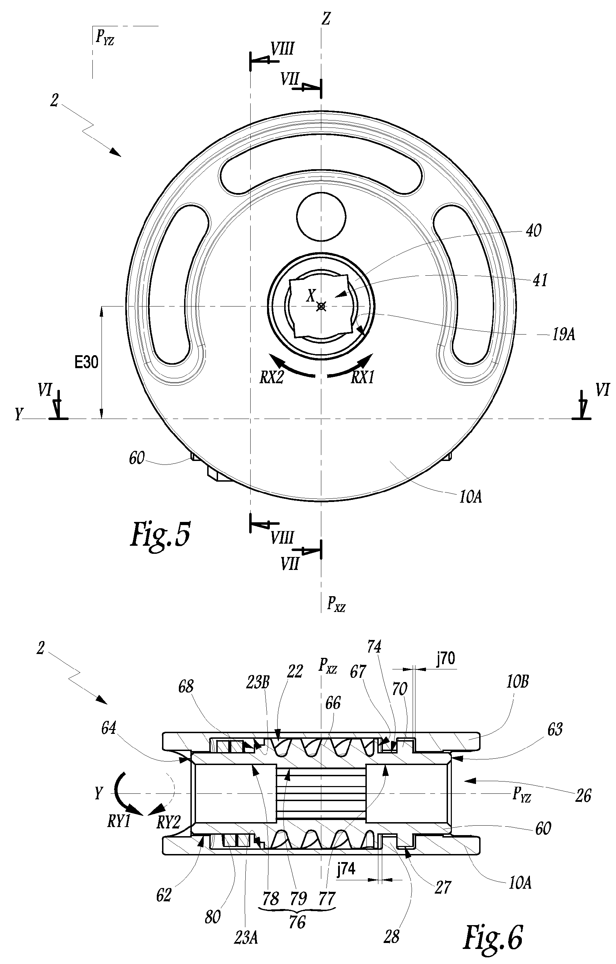

Comme montré aux figures 2 et 6, la vis sans fin 60 comprend une surface cylindrique extérieure 62, des surfaces d'extrémité 63 et 64, la denture 66 hélicoïdale avec un angle d'hélice β66 et des bords 67 et 68, la collerette 70 et une partie intérieure creuse 76. La surface 62 est centrée sur l'axe Y et s'étend entre les extrémités 63 et 64 qui sont perpendiculaires à cet axe Y. La denture 66 est formée axialement le long de l'axe Y au centre de cette surface 62. Les bords 67 et 68 de la denture 66 forment des surfaces d'appui perpendiculaires à l'axe Y, tournées respectivement vers les extrémités 63 et 64. Contrairement à la denture 46 et ses bords 48A et 48B, la denture 66 s'arrête avant les bords 67 et 68 suivant l'axe Y, car la longueur de la vis 60 permet un taillage plus localisé de la denture 66. En correspondance avec l'angle d'hélice β46 de la roue 40, l'angle d'hélice β66 est compris entre 15° et 25°, de préférence égal à 20°.

La collerette 70 forme un épaulement annulaire qui s'étend radialement par rapport à l'axe Y depuis la surface 62 de la vis 60, avec une surface annulaire latérale 71 tournée vers l'extrémité 63 et une surface annulaire latérale 72 tournée vers l'extrémité 64. On note L70 la largueur de la collerette 70 suivant l'axe Y, entre les surfaces 71 et 72. Une rainure annulaire 74, présentant une largeur L74 suivant l'axe Y, est délimitée entre les surfaces 62, 67 et 72. La largeur L74 est supérieure à la largeur L28, tandis que la largeur L70 est inférieure à la largeur L27. Ainsi, un jeu axial j70 est ménagé entre la rainure 27 et la collerette 70, tandis qu'un jeu axial j74 est ménagé dans la rainure 74 entre le bord 67 et l'épaulement 28. Ces jeux axiaux j70 et j74 sont définis par rapport à l'axe Y. A titre d'exemple non limitatif, le rapport de la largeur L70 par la largeur L27 peut être compris entre 0,9 et 0,99, de préférence supérieur à 0,95. Plus ce rapport est proche de 1, plus le jeu j70 est réduit. La rainure 27 encadre la collerette 70 des deux côtés suivant l'axe Y.

En pratique, le poids du tablier 201 et de la barre de charge de l'installation 200 tend à entraîner l'arbre 202 et donc la roue 40 du treuil 2 en rotation autour de l'axe X, dans le sens de rotation RX1. De ce fait, un couple est transmis de la roue 40 à la vis 60 au niveau de l'interface 32, générant ainsi une charge axiale Fy sur la vis 60, comme montré à la figure 2. Sous l'action de cette charge Fy, la surface 72 de la collerette 70 vient en butée axiale contre l'épaulement 28 du carter 10 dans la rainure 27. Autrement dit, cette charge Fy tend à générer une usure des éléments 28 et 70, qui sont configurés pour présenter une résistance optimisée aux frottements et à la pression. De manière optionnelle, ces éléments 28 et 70 peuvent présenter un traitement ou revêtement de surface localisé, tel qu'un dépôt de téflon ou d'un autre matériau de friction. Ainsi, le treuil 2 ne nécessite aucune pièce additionnelle pour limiter l'usure du carter 10, telles que des rondelles d'appui antifriction, contrairement aux treuils existants.

En particulier, il est remarquable que la collerette 70 peut former butée axiale, dans la rainure 27 du carter 10, dans les deux sens suivant l'axe Y. Comme le treuil 2 n'est pas équipé de système de fin de course, il peut être installé indifféremment dans un sens ou l'autre, à l'extrémité de l'arbre 202. De ce fait, la charge axiale résultant du poids du tablier sera appliquée d'un côté ou de l'autre de la collerette 70. La surface 72 de la collerette 70 peut venir en butée axiale contre l'épaulement 28 du carter 10, tandis que la surface 71 de la collerette 70 peut venir en butée axiale contre le carter 10 du côté axialement opposé à l'épaulement 28. Le treuil 2 est globalement symétrique par rapport au plan médian Pyz, donc réversible, de sorte que la charge axiale peut s'appliquer sur la vis sans fin 60 dans un sens ou l'autre suivant l'axe Y.

En variante non représentée, le treuil 2 peut comprendre une vis 60 muni de plusieurs collerettes 70 et rainures 74, tandis que le carter 10 peut comprendre plusieurs rainures 27 et épaulements 28. Par exemple, la vis 60 peut comprend deux, trois ou quatre collerette 70 agencées en parallèle entre la denture 66 et l'extrémité 63, d'un même côté de la vis 60 par rapport à la roue 40. Dans ce cas, la surface de contact entre la vis 60 et le carter 10 est plus importante et, par conséquent, la pression de contact et l'usure sont réduites. La vis 60 et la ou les collerettes 70 forment une pièce monobloc, qui peut être fabriquée par moulage et/ou usinage.

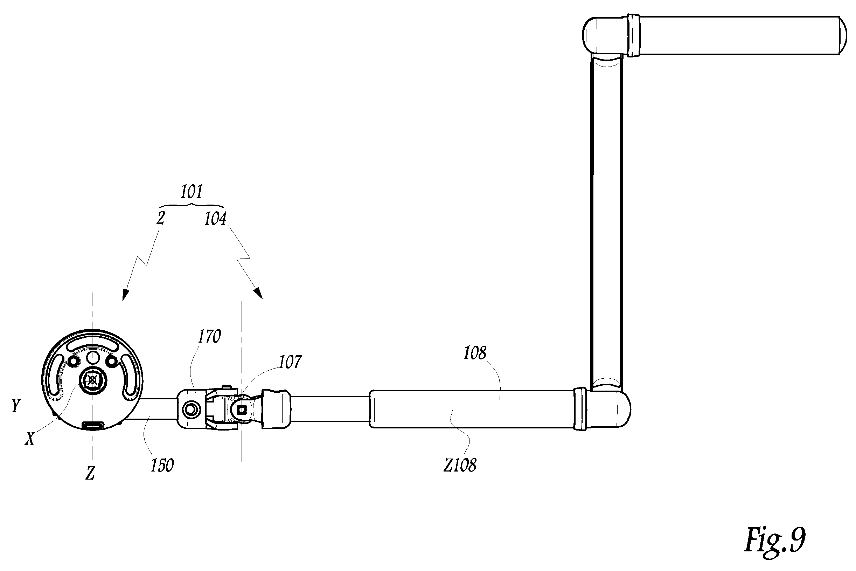

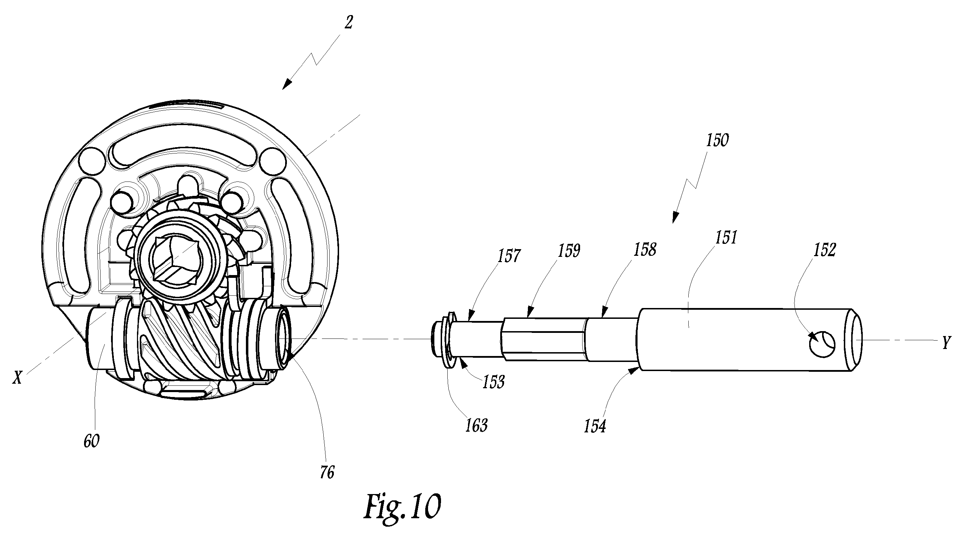

Par ailleurs, la vis 60 comprend une partie creuse 76, avec des alésages 77 et 78 qui sont centrés sur l'axe Y et situés respectivement du côté des extrémités 63 et 64, ainsi qu'un rainurage intérieur 79 ménagé axialement entre ces alésages 77 et 78. Le rainurage 79 est situé radialement à l'opposé de la denture 66 et axialement dans un espace délimité entre les bords 67 et 68. Le rainurage 79 présente un profil complémentaire de la surface extérieure de la tringle 6, avec plusieurs rainures qui s'étendent suivant l'axe Y à l'intérieur de la vis 60. Le rainurage 79 présente par exemple, radialement à l'axe Y, une section hexagonale, carrée, étoilée, ou tout type de section adapté à la présente application. Quelle que soit la configuration du rainurage 79, la partie creuse 76 est adaptée pour permettre à la vis 60 et au treuil 2 de recevoir différents organes d'actionnement, avec une grande polyvalence, comme détaillé ci-après en lien avec les figures 9 et 10.

Comme montré aux figures 3 et 8, le ressort frein 80 est monté directement autour de la vis 60, sans élément intermédiaire interposé entre eux. Le ressort frein 80 comprend un premier brin d'extrémité 82 et un deuxième brin d'extrémité 84 reliés par un enroulement annulaire 86, qui est centré sur l'axe Y et forme la partie courante du ressort 80. Cet enroulement 86 est enroulé sur deux tours autour de la surface 62 de la vis 60 du côté de l'extrémité 64. Le ressort 80 est prévu pour limiter le couple exercé sur le mécanisme 30 sous le seul poids du tablier et de la barre de charge, afin d'empêcher la rotation de la vis 60 et de la roue 40.

A cet effet, le ressort frein 80 est monté avec un ajustement serré autour de la surface 62 et, dans le même temps, la rotation de ce ressort 80 autour de l'axe Y est limitée par l'appui des brins 82 et 84 contre les surfaces 23A et 23B de la partie 22 de la cavité 20, comme montré à la figure 8. Lorsque la roue 40 tend à tourner dans le sens RX1 sous le poids du tablier 201, ce qui tend à entraîner la vis 60 dans le sens RY1, l'appui du brin 82 contre la surface 23A est suffisant pour bloquer ces rotations sans entraîner de dilatation de l'enroulement 86. Dans ce cas, le couple résistant du ressort 80 est supérieur au couple d'entraînement provoqué par le poids propre du tablier 201 et de la barre de charge.

En tournant la manivelle 8, l'utilisateur génère un couple d'entrée supérieur au couple résistant du ressort 80 et peut ainsi transmettre le mouvement à l'arbre 202 et faire monter ou descendre le tablier 201. Dans ce cas, alors que le brin 82 ou 84 est en appui dans le carter 10, pressé respectivement contre la surface 23A ou 23B, le couple d'entrée ou « couple utilisateur » provoque une ouverture du diamètre intérieur de l'enroulement 86, par dilatation. Un jeu radial apparait entre la surface 62 et l'enroulement 86 qui se dilate, permettant ainsi la rotation de la vis 60 autour de l'axe Y. Ce jeu radial est faible à l'échelle du treuil 2, mais néanmoins suffisant pour atteindre le résultat recherché.

L'unique ressort 80 est configuré, notamment par ses dimensions et son matériau, pour développer à lui seul le couple résistant adapté au blocage de la vis 60 en l'absence de couple utilisateur et pour libérer cette vis 60 en présence du couple utilisateur. La configuration du ressort 80 dépend en particulier de la masse du tablier 201 et de la barre de charge, si une telle barre est présente dans l'installation 200. Ainsi, le seul ressort 80 empêche la roue 40 de faire tourner la vis 60 sous le poids du tablier 201 et de la barre de charge, alors qu'il n'empêche pas la vis 60 de faire tourner la roue 40 et l'arbre 202 lors de l'actionnement de la manivelle 8.

En variante non représentée, le ressort 80 peut être enroulé sur un tour ou sur plus de deux tours autour de la vis 60. Dans ce cas, la largeur globale de l'enroulement 86 suivant l'axe Y conserve le même ordre de grandeur, avec une largeur d'enroulement différente sur chaque tour.

Grâce à la présence de la collerette 70 et du ressort 80, chacun de part et d'autre de la vis 60 par rapport à la roue 40, le treuil 2 présente une compacité améliorée par rapport aux treuils existants, notamment selon l'axe Y.

Par ailleurs, comme montré à la figure 7, les deux rondelles d'appui 91 et 92 sont disposées de part et d'autre de la denture 46 de la dent 40. Plus précisément, la rondelle 91 est positionnée dans le logement 24A, en dépassant vers la denture 46, contre le bord 48A de cette denture 46. La rondelle 92 est positionnée dans le logement 24B, en dépassant vers la denture 46, contre le bord 48B de cette denture 46. Lorsque le carter 10 est assemblé, les rondelles 91 et 92 sont comprimées et assurent l'arrêt axial de la roue 40, tout en maintenant un écart entre les bords 48a et 48B et les parois de la partie 24 de la cavité 20. Les rondelles 91 et 92 sont de préférence en acier traité, présentant ainsi un coefficient de frottement réduit par rapport à la roue 40. En alternative, les rondelles 91 et 92 peuvent être en matériau polymère à très faible coefficient de frottement.

Grâce aux rondelles 91 et 92, le risque d'arrachement de matière du carter 10, dans le cas où la denture 46 entrait en contact avec le carter 10, est évité. En effet, en raison de la largeur réduite de la roue 40, le taillage de la denture 46 laisse le profil de denture 46 apparent sur les bords 48A et 48B. Du fait du profil hélicoïdal de cette denture 46, des charges axiales sont exercées sur la roue 40 suivant l'axe X.

En variante non représentée, la roue 40 présente une largeur suffisante pour réaliser une denture 46 non débouchante sur les bords 48A et 48B. Une collerette similaire à la collerette 70 de la vis 60 peut alors être ménagée sur la roue 40 et reçue dans une rainure du carter 10, adapté à cet effet. Dans le cas, le treuil 2 est légèrement moins compact mais ne nécessite pas l'utilisation des rondelles 91 et 92.

Sur les figures 9 et 10 est représenté un deuxième mode de réalisation d'un dispositif de manoeuvre 101 conforme à l'invention. Le dispositif 101 est destiné à équiper une installation de fermeture ou de protection solaire également conforme à l'invention, du type de l'installation 200.

Le dispositif 101 comprend un treuil 2 qui est identique au premier mode de réalisation et coopère avec un système d'actionnement 104 différent du bloc genouillère 4 du premier mode de réalisation.

Le système 104 comprend une broche 150, un accouplement 170, un cardan 107 et une manivelle 108 d'axe Z108. La broche 150 coopère, le long de l'axe Y, avec la vis 60 du treuil 2, ainsi qu'avec le cardan 107 par le biais de l'accouplement 170. L'axe Z108 de la manivelle 108 est mobile dans l'espace autour du cardan 107. La rotation de la manivelle 108 autour de cet axe Z108 est transmise au cardan 107, à la broche 150, au treuil 2 puis à l'arbre d'enroulement du tablier, non représentés.

La broche 150 comprend une partie cylindrique 151, centrée sur un axe Y et reliée à une surface cylindrique 158 par un épaulement 154. Un logement 152 de réception d'une goupille, permettant de solidariser la broche 150 à l'accouplement 170, traverse radialement la partie 151 du côté opposé à l'épaulement 154. La broche 150 comprend également, à son extrémité opposée au logement 152, une surface cylindrique 157 dans laquelle est ménagée une rainure annulaire 153 de réception d'une rondelle annulaire 163. Entre les surfaces 157 et 158 est ménagée une partie 159 présentant une section hexagonale.

En pratique, une partie de la broche 150 pénètre dans la partie creuse 76 de la vis 60, tandis que l'autre partie 151 s'étend hors de la vis 60 et du treuil 2. Les surfaces 157 et 158 sont disposées radialement en regard des alésages, respectivement 77 et 78. L'épaulement 154 est appuyé contre l'extrémité 64 de la vis 60, tandis que la rondelle 163 forme une butée axiale contre l'extrémité 63 de la vis 60, empêchant la translation de l'axe 150 suivant l'axe Y une fois monté. La partie 159 est logée avec un ajustement serré dans le rainurage 79, permettant ainsi la transmission de mouvement en rotation autour de l'axe Y entre la broche 150 et la vis 60. La partie 159 de la broche 150 possède un profil extérieur identique à celui de la tringle d'attaque 6 du premier mode de réalisation.

En variante non représentée, l'installation comprend un moteur électrique. Par exemple, la manivelle 108 peut être remplacée par un moteur électrique. Selon un autre exemple, un arbre de sortie d'un moteur électrique coopère directement avec le rainurage 79 de la vis 60. Selon un autre exemple, l'installation comprend un moteur électrique d'un côté du caisson et le treuil 2, prévu en cas de panne de ce moteur électrique, de l'autre côté du caisson.

L'installation incluant le treuil 2 peut donc être équipée du bloc genouillère 4, du système 104 et/ou d'un moteur électrique en fonction de contraintes d'utilisation et/ou de montage de cette installation sur le bâtiment. Lorsque la manivelle doit être disposée à l'intérieur du bâtiment, le treuil 2 peut être relié au bloc genouillère 4 et à la tringle 6, tandis que lorsque la manivelle doit être disposée à l'extérieur du bâtiment, le treuil 2 peut être relié au système 104 et à la broche 150. Ainsi, le dispositif de manoeuvre selon l'invention, comprenant le treuil 2, présente une polyvalence importante, en plus de sa compacité, sa fiabilité et son efficacité.

## Revendications

1. Dispositif de manoeuvre (1 ; 101) pour une installation (200) de fermeture ou de protection solaire, notamment de type store ou volet roulant, ce dispositif comprenant une roue dentée (40) en prise avec une vis sans fin (60) disposées dans un carter (10), la roue (40) étant mobile en rotation (RX1, RX2) par rapport au carter (10) autour d'un premier axe de rotation (X), la vis (60) étant mobile en rotation (RY1, RY2) par rapport au carter (10) autour d'un deuxième axe de rotation (Y) qui est perpendiculaire au premier axe de rotation (X), la vis (60) étant pourvue d'un unique ressort frein (80) limitant la transmission d'un couple de la roue (40) vers la vis (60), le dispositif (1 ; 101) étant **caractérisé en ce que** la vis (60) est également pourvue d'au moins une collerette (70) logée dans une rainure (27) du carter (10) et formant butée axiale suivant le deuxième axe de rotation (Y) en coopérant avec le carter (10) dans cette rainure (27), la ou les collerettes (70) étant disposées à l'opposé du ressort frein (80) le long de la vis (60), par rapport à un plan (Pxz) contenant le premier axe de rotation (X) et un axe (Z) perpendiculaire aux premier et deuxième axes de rotation (X, Y).

2. Dispositif selon la revendication 1, **caractérisé en ce que** la vis (60) est pourvue d'au moins une collerette (70) formant butée axiale dans la rainure (27) du carter (10) dans les deux sens suivant le deuxième axe de rotation (Y).

3. Dispositif selon l'une des revendications précédentes, **caractérisé en ce que** la ou les collerettes (70) et la vis (60) forment une pièce monobloc.

4. Dispositif selon l'une des revendications précédentes, **caractérisé en ce que** la ou chaque collerette (70) présente un profil d'épaulement annulaire et est logé dans une rainure annulaire (27) correspondante du carter (10).

5. Dispositif selon l'une des revendications précédentes, **caractérisé en ce que** la vis sans fin (60) comprend plusieurs collerettes (70) agencées en parallèle d'un même côté de la vis (60) par rapport à la roue dentée (40).

6. Dispositif selon l'une des revendications précédentes, **caractérisé en ce que** le ressort frein (80) comprend un enroulement (86) positionné avec un ajustement serré autour d'une surface cylindrique (62) de la vis (60) et reliant deux brins d'extrémité (82, 84) du ressort frein (80), ces deux brins (82, 84) étant susceptibles de venir en butée, respectivement de part et d'autre de l'axe de vis (Y), contre des parois (23A, 23B) d'un logement (22) ménagé dans le carter (10).

7. Dispositif selon l'une des revendications précédentes, **caractérisé en ce que** le ressort frein (80) empêche la rotation de la vis (60) sous l'effet d'un couple généré sur cette vis par le poids propre d'un tablier (201) de store ou de volet monté sur un arbre (202) solidaire en rotation de la roue (40).

8. Dispositif selon l'une des revendications précédentes, **caractérisé en ce que**, de chaque côté d'une partie dentée (46) de la roue (40) suivant l'axe de roue (X), une rondelle antifriction (91, 92) formant butée axiale est disposée entre la partie dentée (40) et le carter (10).

9. Dispositif selon l'une des revendications 1 à 7, **caractérisé en ce que** la roue dentée (40) comporte, d'une part, une denture (46) non débouchante sur les deux bords opposés (48A, 48B) de cette roue dentée (40) le long de l'axe de roue (X) et, d'autre part, une collerette ménagée sur la roue dentée (40) et reçue dans une rainure du carter (10), formant butée axiale dans les deux sens le long de l'axe de roue (X).

10. Dispositif selon l'une des revendications précédentes, **caractérisé en ce que** le carter (10) comprend une première partie (10A) et une deuxième partie (10B) délimitant entre elles une cavité (20) dans laquelle sont logés la roue (40), la vis (60) et le ressort frein (80), les deux parties (10A, 10B) de carter (10) étant assemblées selon un procédé de sertissage par fluage ou par ultrason d'au moins un organe en saillie (15, 17) de la première partie (10A) dans un évidement (16, 18) de la deuxième partie (10B).

11. Dispositif selon l'une des revendications précédentes, **caractérisé en ce que** la vis (60) comporte une partie creuse (76) apte à coopérer en rotation (RY1, RY2) avec un mécanisme d'entraînement en rotation, notamment une tringle (6) d'attaque de genouillère (4), une broche (150) appartenant à un système d'actionnement (104) ou un arbre de sortie d'un moteur électrique.

12. Dispositif selon la revendication 11, **caractérisé en ce que** la partie creuse (76) comprend un rainurage (79) de section hexagonale, carrée ou étoilée, recevant sélectivement la tringle (6) ou la broche (150) et solidarisant cette tringle (6) ou cette broche (150) en rotation (RY1, RY2) avec la vis (60).

13. Dispositif selon l'une des revendications précédentes, **caractérisée en ce qu'**il est équipé, sélectivement en fonction de contrainte de montage de l'installation (200) sur un bâtiment, soit d'un bloc genouillère (4) muni de la tringle (6) et d'une manivelle (8) disposée à l'intérieur du bâtiment, soit d'un système d'actionnement (104) muni de la broche (150) et d'une manivelle (108) disposée à l'extérieur du bâtiment.

14. Installation (200) de fermeture ou de protection solaire, notamment du type store ou volant roulant, **caractérisée en ce qu'**elle est équipée d'un dispositif (1 ; 101) selon l'une des revendications précédentes.

15. Installation (200) selon la revendication 14, **caractérisée en ce qu'**elle est équipée d'un moteur électrique, comprenant notamment un arbre de sortie adapté pour coopérer avec une partie creuse (76) de la vis sans fin (60).

## Patentansprüche

1. Betätigungsvorrichtung (1; 101) für eine Anlage (200) zum Schließen oder zum Sonnenschutz, insbesondere des Rollo- oder Rollladen-Typs, wobei die Vorrichtung ein Zahnrad (40) in Eingriff mit einer Schnecke (60) aufweist, welche in einem Gehäuse (10) angeordnet sind, wobei das Rad (40) drehbar (RX1, RX2) relativ zu dem Gehäuse (10) um eine erste Drehachse (X) ist, wobei die Schnecke (60) drehbar (RY1, RY2) relativ zu dem Gehäuse (10) um eine zweite Drehachse (Y) ist, die zu der ersten Drehachse (X) senkrecht ist, wobei die Schnecke (60) mit einer einzigen Bremsfeder (80) versehen ist, welche die Übertragung eines Drehmoments des Rads (40) auf die Schnecke (60) begrenzt, wobei die Vorrichtung (1; 101) **dadurch gekennzeichnet ist, dass** die Schnecke (60) auch mit mindestens einem Kragen (70) versehen ist, der in einer Nut (27) des Gehäuses (10) aufgenommen ist und der einen axialen Anschlag entlang der zweiten Drehachse (Y) bildet, indem er mit dem Gehäuse (10) in dieser Nut (27) zusammenwirkt, wobei der oder die Kragen (70) entgegengesetzt von der Bremsfeder (80) entlang der Schnecke (60) relativ zu einer Ebene (Pxz) angeordnet sind, welche die erste Drehachse (X) und eine Achse (Z), welche senkrecht zu der ersten und der zweiten Drehachse (X, Y) ist, enthält.

2. Vorrichtung nach Anspruch 1, **dadurch gekennzeichnet, dass** die Schnecke (60) mit mindestens einem Kragen (70) versehen ist, welcher einen axialen Anschlag in der Nut (27) des Gehäuses (10) in beiden Richtungen entlang der zweiten Drehachse (Y) bildet.

3. Vorrichtung nach einem der vorhergehenden Ansprüche, **dadurch gekennzeichnet, dass** der oder die Kragen (70) und die Schnecke (60) ein einstückiges Teil bilden.

4. Vorrichtung nach einem der vorhergehenden Ansprüche, **dadurch gekennzeichnet, dass** der oder jeder Kragen (70) ein ringförmiges Schulterprofil aufweist und in einer dem Gehäuse (10) zugehörigen ringförmigen Nut (27) aufgenommen ist.

5. Vorrichtung nach einem der vorhergehenden Ansprüche, **dadurch gekennzeichnet, dass** die Schnecke (60) mehrere Kragen (70) aufweist, welche parallel auf einer gleichen Seite der Schnecke (60) relativ zu dem Zahnrad (40) angeordnet sind.

6. Vorrichtung nach einem der vorhergehenden Ansprüche, **dadurch gekennzeichnet, dass** die Bremsfeder (80) eine Wicklung (86) aufweist, welche mit einer engen Passung um eine zylindrische Oberfläche (62) der Schnecke (60) positioniert ist und zwei Enddrähte (82, 84) der Bremsfeder (80) verbindet, wobei diese zwei Drähte (82, 84) jeweils beidseitig der Schneckenachse (Y) gegen Wände (23A, 23B) einer in dem Gehäuse (10) vorliegenden Aufnahme (22) anliegen können

7. Vorrichtung nach einem der vorhergehenden Ansprüche, **dadurch gekennzeichnet, dass** die Bremsfeder (80) die Drehung der Schnecke (60) unter der Wirkung eines Drehmoments verhindert, welches auf diese Schnecke durch das Eigengewicht eines Panzers (201) des Rollos oder Ladens erzeugt wird, welcher auf einer Welle (202) montiert ist, welche drehfest mit dem Rad (40) ist.

8. Vorrichtung nach einem der vorhergehenden Ansprüche, **dadurch gekennzeichnet, dass** auf jeder Seite eines gezahnten Teils (46) des Rades (40) entlang der Radachse (X) eine Anti-Reibungsscheibe (91, 92), welche einen axialen Anschlag bildet, zwischen dem gezahnten Teil (40) und dem Gehäuse (10) angeordnet ist.

9. Vorrichtung nach einem der Ansprüche 1 bis 7, **dadurch gekennzeichnet, dass** das Zahnrad (40) zum einen eine an den zwei gegenüberliegenden Rändern (48A, 48B) dieses Zahnrades (40) nicht mündende Verzahnung (46) entlang der Radachse (X) und zum anderen einen Kragen aufweist, welcher auf dem Zahnrad (40) angeordnet und in einer Nut des Gehäuses (10) aufgenommen ist, ausbildend einen axialen Anschlag in beiden Richtungen entlang der Radachse (X).

10. Vorrichtung nach einem der vorhergehenden Ansprüche, **dadurch gekennzeichnet, dass** das Gehäuse (10) einen ersten Teil (10A) und einen zweiten Teil (10B) aufweist, welche zwischen sich einen Hohlraum (20) begrenzen, in dem das Rad (40), die Schnecke (60) und die Bremsfeder (80) aufgenommen sind, wobei die zwei Teile (10A, 10B) des Gehäuses (10) nach einem Verfahren des Fassens durch plastisches Fließen oder durch Ultraschall von mindestens einem vorstehenden Element (15, 17) des ersten Teils (10A) in einer Aussparung (16, 18) des zweiten Teils (10B) zusammengebaut sind.

11. Vorrichtung nach einem der vorhergehenden Ansprüche, **dadurch gekennzeichnet, dass** die Schnecke (60) einen hohlen Teil (76) aufweist, welcher geeignet ist, in Rotation (RY1, RY2) mit einem Drehantriebsmechanismus zusammenzuwirken, insbesondere einer Angriffsstange (6) eines Knieantriebs (4), einer Spindel (150), welche zu einem Betätigungssystem (104) gehört, oder einer Ausgangswelle eines Elektromotors.

12. Vorrichtung nach Anspruch 11, **dadurch gekennzeichnet, dass** der hohle Teil (76) eine Rille (79) mit sechseckigem, quadratischem oder sternförmigem Querschnitt aufweist, welche selektiv die Angriffsstange (6) oder die Spindel (150) aufnimmt und diese Stange (6) oder diese Spindel (150) in Drehung (RY1, RY2) mit der Schnecke (60) verbindet.

13. Vorrichtung nach einem der vorhergehenden Ansprüche, **dadurch gekennzeichnet, dass** sie, selektiv in Abhängigkeit von Montagebeschränkungen der Anlage (200) an einem Gebäude, entweder mit einem Knieantriebssblock (4), welcher mit der Angriffsstange (6) und einer in dem Gebäude angeordneten Kurbel (8) versehen ist, oder mit einem Betätigungssystem (104) ausgestattet ist, welches mit der Spindel (150) und einer außerhalb des Gebäudes angeordneten Kurbel (108) versehen ist.

14. Anlage (200) zum Schließen oder zum Sonnenschutz, insbesondere des Rollo- oder Rollladen-Typs, **dadurch gekennzeichnet, dass** sie mit einer Vorrichtung (1; 101) nach einem der vorhergehenden Ansprüche ausgestattet ist.

15. Anlage (200) nach Anspruch 14, **dadurch gekennzeichnet, dass** sie mit einem elektrischen Motor ausgestattet ist, welcher insbesondere eine Ausgangswelle aufweist, welche geeignet ist, mit einem hohlen Teil (76) der Schnecke (60) zusammenzuwirken.

## Claims

1. Operating device (1; 101) for a closing or sun protection installation (200), especially of an awning or roller blind kind, the device comprising a toothed wheel (40) in engagement with an endless screw (60), both arranged in a housing (10), the wheel (40) being capable of rotation (RX1, RX2) relative to the housing (10) about a first axis of rotation (X), the screw (60) being capable of rotation (RY1, RY2) relative to the housing (10) about a second axis of rotation (Y) which is perpendicular to the first axis of rotation (X), the screw (60) being provided with a single brake spring (80) limiting transmission of a torque from the wheel (40) to the screw (60), the device (1; 101) being **characterised in that** the screw (60) is also provided with at least one collar (70) accommodated in a groove (27) in the housing (10) and forming an axial abutment along the second axis of rotation (Y) by co-operating with the housing (10) **in that** groove (27), the collar(s) being arranged opposite the brake spring (80) along the screw (60), with respect to a plane (Pxz) containing the first axis of rotation (X) and an axis (Z) perpendicular to the first and second axes of rotation (X, Y).

2. Device according to claim 1, **characterised in that** the screw (60) is provided with at least one collar (70) forming an axial abutment in the groove (27) in the housing (10) in the two directions along the second axis of rotation (Y).

3. Device according to one of the preceding claims, **characterised in that** the collar(s) (70) and the screw (60) form one integral part.

4. Device according to one of the preceding claims, **characterised in** the or each collar (70) has the profile of an annular shoulder and is accommodated in a corresponding annular groove (27) in the housing (10).

5. Device according to one of the preceding claims, **characterised in that** the endless screw (60) comprises a plurality of collars (70) provided in parallel on the same side of the screw (60) relative to the toothed wheel (40).

6. Device according to one of the preceding claims, **characterised in that** the brake spring (80) comprises a wound portion (86) which is located with a tight fit around a cylindrical surface (62) of the screw (60) and which connect two end strands (82, 84) of the brake spring (80), those two strands (82, 84) being arranged to abut, each on a respective side of the screw axis (Y), against the walls (23A, 23B) of an accommodation space (22) provided in the housing (10).

7. Device according to one of the preceding claims, **characterised in that** the brake spring (80) prevents rotation of the screw (60) under the effect of a torque imparted to said screw by the dead-weight of a sheet (201) of an awning or blind mounted on a shaft (202) connected to the wheel (40) for conjoint rotation.

8. Device according to one of the preceding claims, **characterised in that**, on each side of a toothed part (46) of the wheel (40) along the wheel axis (X), an anti-friction washer (91, 92) forming an axial abutment is arranged between the toothed part (40) and the housing (10).

9. Device according to one of claims 1 to 7, **characterised in that** the toothed wheel (40) has, on the one hand, a tooth arrangement (46) which is not open to the two opposite edges (48A, 48B) of this toothed wheel (40) along the wheel axis (X) and, on the other hand, a collar provided on the toothed wheel (40) and accommodated in a groove in the housing (10) forming an axial abutment in the two directions along the wheel axis (X).

10. Device according to one of the preceding claims, **characterised in that** the housing (10) comprises a first part (10A) and a second part (10B) delimiting between them a cavity (20), in which there are accommodated the wheel (40), the screw (60) and the brake spring (80), the two parts (10A, 10B) of the housing (10) being assembled by a method of crimping by plastic flow or by ultrasound at feast one projecting element (15, 17) on the first part (10A) in a recess (16, 18) in the second part (10B).

11. Device according to one of the preceding claims, **characterised in that** the screw (60) has a hollow portion (76) capable of rotation (RY1, RY2) in co-operation with a rotary drive mechanism, especially an articulated-lever (4) operating rod (6), a spindle (150) belonging to an actuation system (104) or an output shaft of an electric motor.

12. Device according to claim 11, **characterised in that** the hollow portion (76) comprises a fluted region (79) of hexagonal, square or star-shaped cross-section selectively receiving the rod (6) or spindle (150) and connecting that rod (6) or that spindle (150) to the screw (60) for conjoint rotation (RY1, RY2).

13. Device according to one of the preceding claims, **characterised in that** it is provided, selectively as a function of the mounting constraints of the installation (200) on a building, either with an articulated lever unit (4) provided with the rod (6) and a crank (8) which is located on the inside of the building, or with an actuating system (104) provided with the spindle (150) and a crank (108) which is located on the outside of the building.

14. Closing or sun protection installation (200), especially of an awning or roller blind kind, **characterised in that** it is provided with a device (1; 101) according to one of the preceding claims.

15. Installation (200) according to claim 14, **characterised in that** it is provided with an electric motor comprising especially an output shaft arranged to co-operate with a hollow portion (76) of the endless screw (60).
